# EUROPEAN PATENT APPLICATION

(11) **EP 4 800 978 A1**
(43) Date of publication of application: **02.09.2026**
(21) Application number: 24880975.8
(22) Date of filing: 06.05.2024
(51) Int. Cl.: H04L 9/40

(54) **ACCESS CONTROL METHOD, ACCESS CONTROL END, AND CLUSTER**

(30) Priority: 25.10.2023 CN 202311393692; 31.01.2024 CN 202410137605
(71) Applicant: Huawei Cloud Computing Technologies Co., Ltd., Gui'an New District, Guizhou 550025 (CN)
(72) Inventor: ZHANG, Yuanlong, Guiyang, Guizhou 550025 (CN)
(74) Representative: Thun, Clemens
(86) International application number: PCT/CN2024/091214
(87) International publication number: WO 2025/086596

(57) **Abstract**

An access control method, an access control end, and a cluster are provided. The method includes: receiving a target data packet, where the target data packet includes a to-be-matched value; obtaining target code of at least one rule from an access control list ACL, where the target code includes a matching logic instruction and a matching item that correspond to each rule, and the matching item is used to determine whether the to-be-matched value matches a rule corresponding to the matching item; executing the matching logic instruction based on the matching item and the to-be-matched value, to obtain a matching result between the to-be-matched value and the rule corresponding to the matching item; and based on the matching result, allowing the target data packet to pass through or preventing the target data packet from passing through. The method can improve efficiency of access control.

## Description

This application claims priorities to Chinese Patent Application No. 202311393692.6, filed with the China National Intellectual Property Administration on October 25, 2023, and entitled "DATA PROCESSING METHOD, APPARATUS, AND ANOTHER DEVICE", and to Chinese Patent Application No. 202410137605.9, filed with the China National Intellectual Property Administration on January 31, 2024, and entitled "ACCESS CONTROL METHOD, ACCESS CONTROL END, AND CLUSTER", both of which are incorporated herein by reference in their entireties.

### TECHNICAL FIELD

This application relates to the field of cloud computing technologies, and in particular, to an access control method, an access control end, and a cluster.

### BACKGROUND

An access control list (access control list, ACL) is an access control technology based on packet filtering. The ACL includes at least one piece of routing information, each piece of routing information may include at least one rule, and the at least one rule is used to perform access control on a data packet. Specifically, if the data packet matches the at least one rule, the data packet is allowed to pass through or prevented from passing through. Each of the at least one rule in the ACL usually includes one or more matching items. Whether the data packet matches a corresponding rule is determined by determining whether a to-be-matched value of the data packet is consistent with a matching item.

Currently, a matching item of a rule is stored in a memory. When it is determined whether a data packet matches the rule, the matching item needs to be read from the memory. This causes a large quantity of memory access operations, and affects efficiency of access control.

### SUMMARY

Embodiments of this application provide an access control method, an access control end, and a cluster, to improve efficiency of access control.

According to a first aspect, an access control method is provided. The method includes: receiving a target data packet, where the target data packet includes a to-be-matched value; obtaining target code of at least one rule from an access control list ACL, where the target code includes a matching logic instruction and a matching item that correspond to each rule, and the matching item is used to determine whether the to-be-matched value matches a rule corresponding to the matching item; executing the matching logic instruction based on the matching item and the to-be-matched value, to obtain a matching result between the to-be-matched value and the rule corresponding to the matching item; and based on the matching result, allowing the target data packet to pass through or preventing the target data packet from passing through.

In the method, the matching item is included in code used to perform access control. When loading the code from a memory, a processor can obtain the matching item through loading. In this way, when it is determined whether the target data packet matches the rule, the matching item does not need to be separately obtained from the memory, thereby reducing a quantity of times of memory access, reducing memory access operations, and improving efficiency of access control.

In a possible implementation, the to-be-matched value includes at least one of a protocol number, a source port, a source internet protocol IP address, a destination port, and a destination IP address.

In this implementation, the ACL may control the data packet based on at least one of the protocol number, the source port, the source internet protocol IP address, the destination port, and the destination IP address, thereby improving flexibility of access control.

In a possible implementation, before the receiving the target data packet, the method includes: obtaining the matching item; and generating the target code based on the matching logic instruction and the matching item that correspond to the at least one rule.

In this implementation, before access control is performed based on the ACL, the matching item in the ACL may be obtained, and the matching item is included in the code used to perform access control, to obtain the target code. In this way, when access control is performed on the target data packet by using the target code, the matching item does not need to be separately obtained from the memory, thereby reducing memory access operations and improving efficiency of access control.

In a possible implementation, the matching item is a default value, and the generating the target code based on the matching logic instruction and the matching item that correspond to the at least one rule includes: generating default code based on the matching logic instruction and the matching item that are of the at least one rule, where the default code indicates to skip execution of the matching logic instruction.

The matching item is the default value, which indicates that the to-be-matched value matches the rule regardless of a value the to-be-matched value. Therefore, a corresponding matching logic instruction does not need to be executed. In this case, the default code is generated, and the default code indicates to skip the execution of the matching logic instruction. Therefore, during access control, the execution of the matching logic instruction may be skipped based on the default code, thereby reducing an execution operation of the logic instruction and improving efficiency of access control.

In a possible implementation, the matching item is a preset value, and the generating the target code based on the matching logic instruction and the matching item that correspond to the at least one rule includes: generating first determining code based on the matching logic instruction and the matching item that are of the at least one rule, where the first determining code indicates to determine whether the to-be-matched value is consistent with the matching item.

If the matching item is the preset value, the matching result between the to-be-matched value and the rule may be obtained by determining whether the to-be-matched value is consistent with the matching item. This has high matching efficiency, and can improve efficiency of access control.

In a possible implementation, the matching item is a preset interval, the preset interval includes a left endpoint and a right endpoint, and the generating the target code based on the matching logic instruction and the matching item that correspond to the at least one rule includes: determining that the left endpoint is a smallest value of the to-be-matched value, and generating second determining code based on the matching logic instruction and the matching item that are of the at least one rule, where the second determining code indicates to determine whether the to-be-matched value is less than or equal to the right endpoint; or determining that the right endpoint is a largest value of the to-be-matched value, and generating third determining code based on the matching logic instruction and the matching item that are of the at least one rule, where the third determining code indicates to determine whether the to-be-matched value is greater than or equal to the left endpoint.

When the matching item is a plurality of consecutive values, the plurality of consecutive values may be represented by an interval. The matching result between the to-be-matched value and the rule may be obtained by determining whether the to-be-matched value is in the interval. This improves efficiency of access control.

When a left endpoint of the interval is the smallest value of the to-be-matched value, the matching result between the to-be-matched value and the rule can be obtained only by determining whether the to-be-matched value is less than or equal to a right endpoint of the interval. This further improves efficiency of access control.

When the right endpoint of the interval is the largest value of the to-be-matched value, the matching result between the to-be-matched value and the rule can be obtained only by determining whether the to-be-matched value is greater than or equal to the left endpoint of the interval. This further improves efficiency of access control.

In a possible implementation, the target code of the at least one rule in the ACL is generated by a JIT compiler based on a dictionary tree structure.

In this implementation, the target code may be generated based on the dictionary tree structure of the ACL by using a code compilation capability of the JIT. This has high code generation efficiency.

According to a second aspect, an access control end is provided. The access control end includes: a receiving module, configured to receive a target data packet, where the target data packet includes a to-be-matched value; an obtaining module, configured to obtain target code of at least one rule from an access control list ACL, where the target code includes a matching logic instruction and a matching item that correspond to each rule, and the matching item is used to determine whether the to-be-matched value matches a rule corresponding to the matching item; an execution module, configured to execute the matching logic instruction based on the matching item and the to-be-matched value, to obtain a matching result between the to-be-matched value and the rule corresponding to the matching item; and a control module, configured to: based on the matching result, allow the target data packet to pass through or prevent the target data packet from passing through.

In a possible implementation, the to-be-matched value includes at least one of a protocol number, a source port, a source internet protocol IP address, a destination port, and a destination IP address.

In a possible implementation, before the target data packet is received, the obtaining module is configured to: obtain the matching item; and generate the target code based on the matching logic instruction and the matching item that correspond to the at least one rule.

In a possible implementation, the matching item is a default value, and the obtaining module is configured to generate default code based on the matching logic instruction and the matching item that are of the at least one rule, where the default code indicates to skip execution of the matching logic instruction.

In a possible implementation, the matching item is a preset value, and the obtaining module is configured to generate first determining code based on the matching logic instruction and the matching item that are of the at least one rule, where the first determining code indicates to determine whether the to-be-matched value is consistent with the matching item.

In a possible implementation, the matching item is a preset interval, the preset interval includes a left endpoint and a right endpoint, and the obtaining module is configured to: determine that the left endpoint is a smallest value of the to-be-matched value, and generate second determining code based on the matching logic instruction and the matching item that are of the at least one rule, where the second determining code indicates to determine whether the to-be-matched value is less than or equal to the right endpoint; or determine that the right endpoint is a largest value of the to-be-matched value, and generate third determining code based on the matching logic instruction and the matching item that are of the at least one rule, where the third determining code indicates to determine whether the to-be-matched value is greater than or equal to the left endpoint.

In a possible implementation, the target code of the at least one rule in the ACL is generated by a JIT compiler based on a dictionary tree structure.

According to a third aspect, a compute device cluster is provided, and includes at least one compute device. Each compute device includes a processor and a storage, and a processor of the at least one compute device is configured to execute instructions stored in a storage of the at least one compute device, to enable the compute device cluster to perform the method provided in the first aspect.

According to a fourth aspect, a computer program product including instructions is provided. When the instructions are run by a compute device cluster, the compute device cluster is enabled to perform the method provided in the first aspect.

According to a fifth aspect, a computer-readable storage medium is provided, and includes computer program instructions. When the computer program instructions are executed by a compute device cluster, the compute device cluster performs the method provided in the first aspect.

For beneficial effects of the second aspect to the fifth aspect, refer to the foregoing descriptions of the beneficial effects of the first aspect. Details are not described herein again.

### BRIEF DESCRIPTION OF DRAWINGS

FIG. 1 is a diagram of a system architecture according to an embodiment of this application;
FIG. 2 is a diagram of a structure of an access control end according to an embodiment of this application;
FIG. 3 is a diagram of a dictionary tree according to an embodiment of this application;
FIG. 4 is a flowchart of code generation according to an embodiment of this application;
FIG. 5 is a diagram of a dictionary tree according to an embodiment of this application;
FIG. 6 is a diagram of a dictionary tree according to an embodiment of this application;
FIG. 7 is a diagram of a dictionary tree according to an embodiment of this application;
FIG. 8 is a flowchart of an access control method according to an embodiment of this application;
FIG. 9 is a diagram of a structure of an access control end according to an embodiment of this application;
FIG. 10 is a diagram of a structure of a compute device according to an embodiment of this application;
FIG. 11 is a diagram of a structure of a compute device cluster according to an embodiment of this application; and
FIG. 12 is a diagram of a structure in which compute device clusters are connected via a network according to an embodiment of this application.

### DESCRIPTION OF EMBODIMENTS

The following describes solutions in embodiments of this application with reference to the accompanying drawings. In embodiments of this application, "a plurality of" means two or more. "First", "second", and the like are merely intended to distinguish between similar objects, but do not necessarily describe a specific sequence or a specific quantity of objects.

The following first describes technical terms that may be used in embodiments of this application.

Access control list (access control list, ACL): is a rule list configured by a user for resource access control. ACLs are classified into a plurality of types such as a network ACL and a file system ACL Generally, the network ACL is a rule list for access control on an intranet resource. The file system ACL is a rule list for access control on a file system. The ACL includes at least one piece of routing information, and each piece of routing information includes at least one rule. If a data packet matches at least one rule of routing information, it may be determined that the data packet matches the routing information, that is, the data packet hits the routing information. When the at least one rule is a plurality of rules, there is a matching sequence of the plurality of rules. When access control is performed on the data packet, whether the data packet matches the plurality of rules is sequentially determined in the matching sequence. Specifically, for two rules whose locations are adjacent in the matching sequence, it is first determined whether the data packet matches a rule with a former location, and if the matching succeeds, it is then determined whether the data packet matches a rule with a latter location. The rest can be deduced by analogy. For a piece of routing information, whenever a rule is not matched, the matching stops, and a matching result indicating that the data packet does not match the routing information is obtained. Then, it is determined whether the data packet matches a next piece of routing information. The rest can be deduced by analogy, until a matching result indicating that the data packet matches one piece of routing information is obtained, or a matching result indicating that the data packet does not match any piece of routing information is obtained. In addition, ACL-based access control complies with a mechanism "The matching stops once hitting succeeds". Once the matching result indicating that the data packet matches one piece of routing information is obtained, the matching stops, and there is no need to determine whether the data packet matches other routing information. If the ACL is a whitelist, when the data packet does not match any routing information, the data packet is prevented from passing through, that is, the data packet is prevented from accessing a corresponding resource. Correspondingly, when the data packet matches any routing information, the data packet is allowed to pass through, that is, the data packet is allowed to access a corresponding resource. If the ACL is a blacklist, when the data packet matches any routing information, the data packet is prevented from passing through. Correspondingly, when the data packet does not match any routing information, the data packet is allowed to pass through. In addition, there is an implicit statement at the end of an ACL rule. When the ACL is a whitelist, the implicit statement indicates that the data packet is prevented from passing through. In other words, when the data packet does not match any routing information, the implicit statement is executed, and the data packet is prevented from passing through. When the ACL is a blacklist, the implicit statement indicates that the data packet is allowed to pass through. In other words, when the data packet does not match any routing information, the implicit statement is executed, and the data packet is allowed to pass through.

Matching item: belongs to a rule and is used to determine whether a data packet matches the rule. The matching item is used to determine whether the data packet matches the rule by determining whether a to-be-matched value in the data packet matches the rule. For example, a destination address includes four bytes, and each byte is used as one rule. The destination address may be specifically set to "192.167.1.1." In this case, a matching item of a 1^{st} byte (that is, a 1^{st} rule of the destination address) is "192", a matching item of a 2^{nd} byte (that is, a 2^{nd} rule of the destination address) is "167", a matching item of a 3^{rd} byte (that is, a 3^{rd} rule of the destination address) is "1", and a matching item of a 4th byte (that is, a 4th rule of the destination address) is "1".

To-be-matched value: is a value carried in a data packet. The to-be-matched value corresponds to an ACL rule. The to-be-matched value is used to determine whether the data packet matches the rule. When the to-be-matched value is consistent with a matching item of a corresponding rule, it may be determined that the to-be-matched value matches the rule. When the to-be-matched value matches the rule, it indicates that the data packet matches the rule. For example, when the rule is a source internet protocol (internet protocol, IP) address, the to-be-matched value is a value of the source IP address of the data packet. For another example, if the rule is the 1^{st} byte in the destination address, the to-be-matched value is a value of a 1^{st} byte in a destination address carried in the data packet.

A dictionary tree: is also referred to as a trie tree or a prefix tree, is of a tree data structure, and can be used to collect statistics on, sort, and store a large quantity of strings. A string recorded by a node in the dictionary tree is a prefix of a string recorded by a next-hop node of the node, and nodes that record a same string may be combined into one node. In other words, one node may have a plurality of next-hop nodes, and a string recorded by the node is a common prefix of strings recorded by the plurality of next-hop nodes of the node. In this way, during query, a common prefix of a plurality of strings can be used to reduce unnecessary string comparison, and query efficiency is high.

Just-in-time compilation (just-in-time compilation, JIT): is also referred to as dynamic translation or run-time compilation, and is a method of compiling computer code. The method is used for compilation in a program execution process (that is, during execution). The compilation refers to converting source code or bytecode into machine code that can be directly executed by a computer. The just-in-time compilation is performed by a JIT compiler.

Embodiments of this application provide an ACL-based access control method. In the method, a matching item of a rule of an ACL may be included in target code of the rule, so that when loading the target code of the rule, a processor can obtain the matching item through loading. When access control is performed on a target data packet, whether a to-be-matched value of the target data packet matches a corresponding rule is directly determined based on the matching item in the target code, to obtain a matching result between the to-be-matched value of the data packet and the rule. Then, based on the matching result, the target data packet may be allowed to pass through or prevented from passing through. In this way, the matching item does not need to be read from a memory, thereby reducing a memory reading operation, and improving efficiency of access control.

The following describes the access control method provided in embodiments of this application.

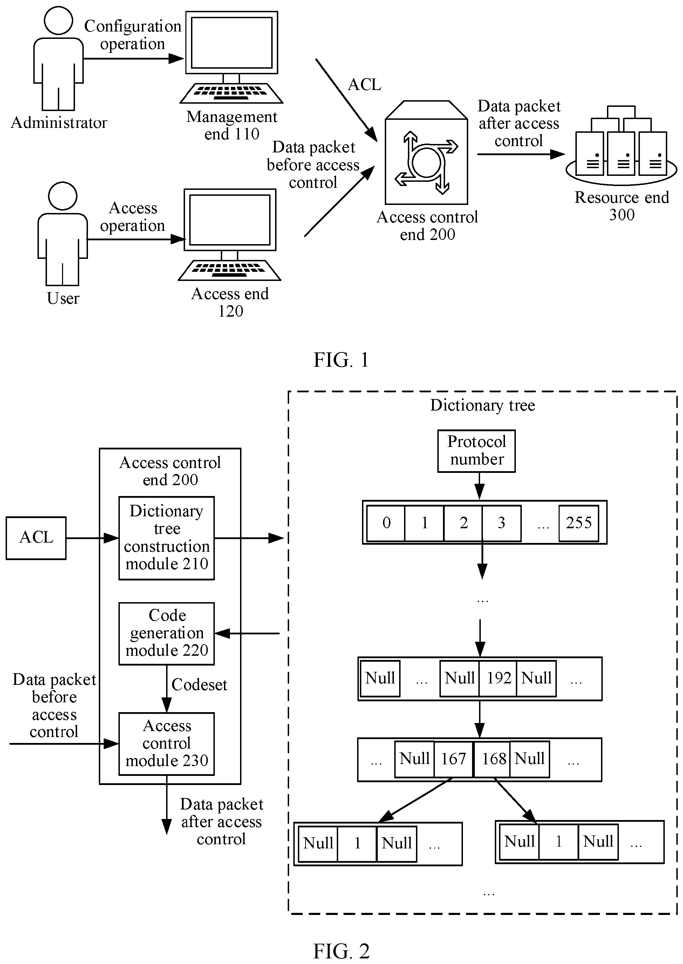

FIG. 1 is a diagram of a system architecture of an access control method according to an embodiment of this application. As shown in FIG. 1, the system architecture may include a management end 110, an access end 120, an access control end 200, and a resource end 300. The management end 110 and the access end 120 may be any apparatus, platform, or cluster having data processing and communication functions, for example, a terminal device or a server. The access control end 200 may be a cloud platform, a compute device, a compute device cluster, or the like. In some embodiments, the access control end 200 may be a computing instance like a virtual machine (virtual machine, VM) or a container (container) deployed on the cloud platform, the compute device, or the compute device cluster. In some embodiments, the access control end 200 may be a hardware device like a switch, a router, or a hardware firewall. In some embodiments, the access control end 200 may be a software system like a virtual network or a software firewall. The resource end 300 is a destination end that the access end 120 requests to access. In some embodiments, the resource end 300 may be an intranet of an organization like an enterprise. In some embodiments, the resource end 300 may be a file system. In some embodiments, the resource end 300 may be a cloud network, for example, a virtual private cloud (virtual private cloud, VPC).

An administrator may configure, on the management end 110, an ACL for the resource end 300 through a configuration operation. The management end 110 may send the ACL to the access control end 200, so that the access control end 200 performs, based on the ACL, access control on a data stream sent to the resource end 300. A user may trigger, through an access operation, the access end 120 to send the data stream used to access the resource end 300. The data stream includes a plurality of data packets that are sequentially sent in a time sequence. The access control end 200 may perform access control on the data packets in the data stream, and send a data packet after access control (that is, a data packet selected through access control) to the resource end 300, to implement access to the resource end 300 by the user.

The following describes a function of the access control end 200 with reference to FIG. 2.

Refer to FIG. 2. The access control end 200 may include a code generation module 220 and an access control module 230.

In some embodiments, the code generation module 220 may generate target code of at least one rule in the ACL. The ACL may include at least one piece of routing information, and each piece of routing information includes at least one rule. The code generation module 220 may generate target code of the at least one rule of each piece of routing information.

In some embodiments, it may be specified that the ACL includes three pieces of routing information shown in Table 1, and each piece of routing information includes at least one rule. It may be specified that access control on the target data packet is performed by determining, at a granularity of a byte, whether the target data packet complies with a rule in the ACL. In this case, each piece of routing information is divided into 11 rules based on a byte granularity, that is, each piece of routing information includes 11 rules. A protocol number is one byte and represents one rule. A source IP address is four bytes and may be divided into four rules. A source port is two bytes and may be divided into two rules. A destination IP address is four bytes and may be divided into four rules. A destination port is two bytes and may be divided into two rules. In this way, the routing information included in the ACL may be divided into at least one rule. A matching sequence of the at least one rule is as follows: the protocol number, a 1^{st} byte of the source IP address, a 2^{nd} byte of the source IP address, a 3^{rd} byte of the source IP address, a 4^{th} byte of the source IP address, a 1^{st} byte of the source port, a 2^{nd} byte of the source port, a 1^{st} byte of the destination IP address, a 2^{nd} byte of the destination IP address, a 3^{rd} byte of the destination IP address, a 4^{th} byte of the destination IP address, a 1^{st} byte of the destination port, and a 2^{nd} byte of the destination port.

**Table 1**

| Protocol number | Source IP address | Source port | Destination IP address | Destination port |
|---|---|---|---|---|
| 6 | 0.0.0.0/0 | 0.0/0 | 192.167.1.1/30 | 8.0/8 |
| 6 | 0.0.0.0/0 | 0.0/0 | 192.168.1.77/32 | 8.0/8 |
| 6 | 0.0.0.0/0 | 0.0/0 | 192.169.1.177/32 | 8.0/8 |

In some embodiments, it may be specified that the ACL includes two pieces of routing information shown in Table 2, and each piece of routing information includes at least one rule. The protocol number is a preset value, and each of the IP addresses and the ports may be represented as an interval. In this embodiment, the protocol number, the source IP address, the source port, the destination IP address, and the destination port in each piece of routing information may be used as rules in the ACL.

**Table 2**

| Sequence number | Protocol number | Source IP address | Source port | Destination IP address | Destination port |
|---|---|---|---|---|---|
| 1 | 6 | 0.0.0.0/0 (equivalent to 0-0xFFFFFFFF) | 0-65535 | 192.168.0.0/2 (equivalent to 0xc0a80000-0xc0a800ff) | 0-80 |
| 2 | 0 | 0.0.0.0/0 | 0-65535 | 0.0.0.0/0 | 0-65535 |

The code generation module 220 may generate, based on the at least one rule of each piece of routing information, the target code for the routing information. Target code of each rule may be generated one by one according to the matching sequence of the at least one rule, to obtain the target code of the at least one rule. The target code of the at least one rule may be referred to as target code of the routing information to which the at least one rule belongs. Target code of a plurality of pieces of routing information included in the ACL forms target code of the ACL.

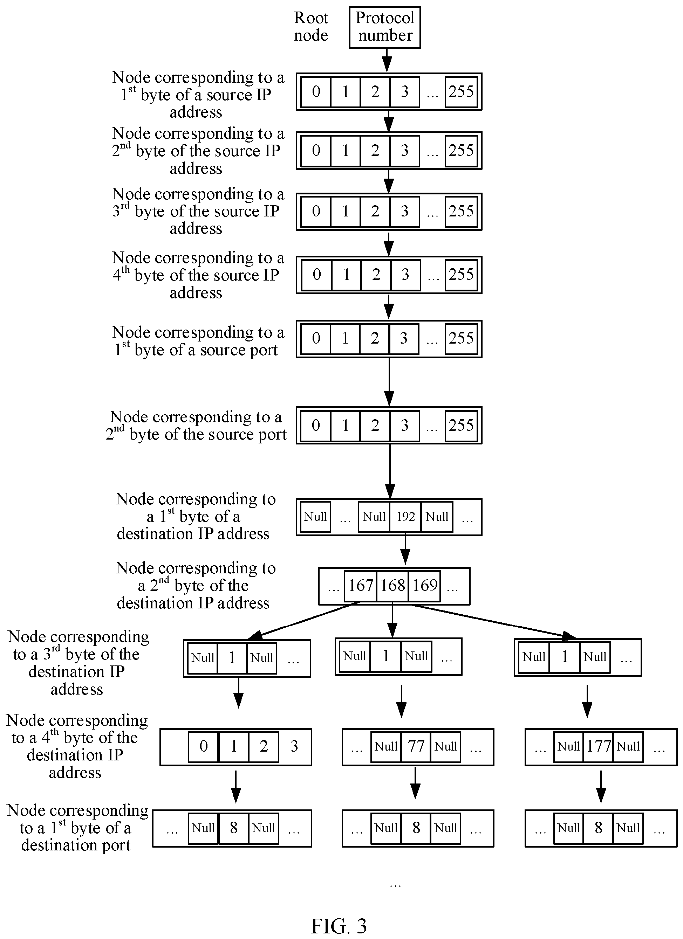

In some embodiments, the code generation module 220 generates the target code of the at least one rule in the ACL based on a dictionary tree corresponding to the ACL. As shown in FIG. 2, the access control end 200 further includes a dictionary tree construction module 210. The dictionary tree construction module 210 may obtain an ACL, and generate a dictionary tree based on the ACL. For example, the dictionary tree construction module 210 may generate, based on the ACL shown in Table 1 and according to a dictionary tree generation algorithm, a dictionary tree shown in FIG. 3.

As shown in FIG. 3, the ACL includes a plurality of rules, and the dictionary tree includes a plurality of nodes. The plurality of rules correspond to nodes in the plurality of nodes. In a matching sequence of the plurality of rules, a rule corresponding to a node is before a rule corresponding to a next-hop node of the node. The node records a matching item of the rule corresponding to the node.

In a conventional table lookup manner, when access control is performed on the target data packet, jumping is performed between the plurality of nodes. Each time jumping to a node is performed, a matching item recorded by the node is obtained, and whether the target data packet is consistent with a rule is determined based on the matching item. A sequence of jumping between the plurality of nodes is consistent with the matching sequence of the plurality of rules. A root node represents a protocol number. When access control is performed on the target data packet, matching is performed from the root node.

More specifically, each node has 256 positions, and each position is used to record a matching item of a corresponding rule. If the 256 positions all have values, it indicates that matching items of the rule cover all possible values of a to-be-matched value of the target data packet, that is, the rule is no limitation (for example, the rule is "any"). For example, the 1^{st} byte of the source IP address in each piece of routing information shown in Table 1 records 0, 1, 2, ..., 255, which covers all possible values of the 1^{st} byte of the source IP address. This indicates that a rule represented by the 1^{st} byte is no limitation.

As described above, a string recorded by a node in the dictionary tree is a prefix of a string recorded by a next-hop node of the node. In other words, a matching item recorded by the node is a prefix of a matching item recorded by the next-hop node of the node. If matching items of corresponding rules in different routing information have a same prefix, the prefix is recorded in merely one node. In addition, if the matching items of the corresponding rules in different routing information are different, when these different matching items have a same prefix, these different matching items are also recorded in a same node, and are specifically recorded in different positions of the same node. For example, as shown in Table 1, matching items of rules represented by 2^{nd} bytes in destination IP addresses in different routing information are different, and are respectively a preset value "167", a preset value "168", and a preset value "169". A matching item of a rule represented by the 1^{st} byte in the destination IP address in each piece of routing information is a preset value "192". In other words, matching items of rules represented by 1^{st} bytes in destination IP addresses in different pieces of routing information are the same. In this case, the matching items of the rules represented by the 2^{nd} bytes in the destination IP addresses in the different routing information have a common prefix, and the common prefix is the matching item of the rule represented by the 1^{st} byte in the destination IP address.

In addition, if the matching items of the corresponding rules in different routing information are different, it indicates that the matching items are different prefixes, and next-hop nodes of nodes that record the matching items of the rules are different, that is, branches are generated from the nodes that record the matching items of the rules. For example, as shown in Table 1, the matching items of the rules represented by the 2^{nd} bytes of the destination IP addresses are respectively a preset value "167", a preset value "168", and a preset value "169" and respectively point to different next-hop nodes. In other words, the dictionary tree generates branches from nodes that record the preset value "167", the preset value "168", and the preset value "169", and the nodes that record the preset value "167", the preset value "168", and the preset value "169" have a plurality of next-hop nodes.

For a specific manner of generating the dictionary tree based on the ACL, refer to descriptions in a conventional technology. Details are not described herein again.

The code generation module 220 may obtain the dictionary tree constructed by the dictionary tree construction module 210, and generate the target code of the ACL based on the dictionary tree. A specific generation process is described below, and details are not described herein again.

In some embodiments, the code generation module 220 may be implemented as a JIT compiler. In this way, a capability of compiling source code or bytecode into machine code by using the JIT compiler can be used to convert the rule in the ACL or the dictionary tree corresponding to the ACL into the target code of the at least one rule in the ACL (that is, generate the target code based on the dictionary tree).

The access control module 230 may obtain the target code generated by the code generation module 220, and perform, by executing the target code, access control on the data packet sent to the resource end 300. A specific process of the access control is described below, and details are not described herein.

The foregoing example describes a system architecture that can be used to implement the access control method provided in embodiments of this application. The following describes, with reference to the system architecture, a specific process of the access control method provided in embodiments of this application.

First, a process of generating target code of a rule in the ACL is described.

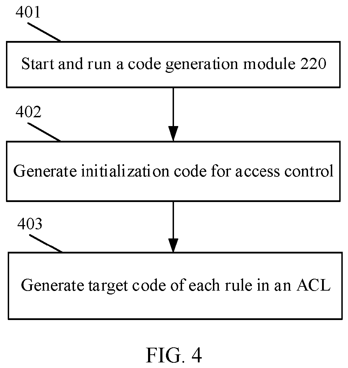

Refer to FIG. 4. After the ACL is obtained, the code generation module 220 may be started and run in step 401. In some embodiments, if the code generation module 220 generates the target code of the ACL based on the ACL dictionary tree, the code generation module 220 is started and runs after the dictionary tree construction module 210 generates the dictionary tree.

In some embodiments, after the code generation module 220 is started, step 402 may be performed to generate initialization code used for access control.

In an example of this embodiment, the initialization code includes code used to push a non-volatile register to a stack and back up the non-volatile register. The code may back up caller information of the target code when the access control module 230 executes the target code, to avoid damage to the caller information in an execution process of the target code.

In another example of this embodiment, the initialization code includes code used to allocate a register. The code is used to allocate a register pointing to a current rule and a register pointing to a current query string. The register pointing to the current rule is a register that is in a processor (for example, a central processing unit (central processing unit, CPU)) and that is used to store an address of the current rule. As described above, for access control on the data packet, whether a to-be-matched value in the data packet matches each of the at least one rule is sequentially determined according to the matching sequence of the at least one rule. When it is needed to determine, according to the matching sequence, whether the to-be-matched value matches the current rule, the target code of the current rule is obtained from the register pointing to the current rule, and the code is executed.

In an example, the register pointing to the current rule is specifically a register pointing to a current dictionary tree node. The current dictionary tree node is a dictionary tree node that records a matching item of the current rule.

The register pointing to the current query string is a register used by the processor to store the current query string. The current query string is a string in the data packet, that is, the to-be-matched value in the data packet. Whether the data packet matches the current rule is determined by determining whether the string is consistent with the matching item of the current rule. Details are described below with reference to the accompanying drawings, and are not described one by one herein.

Still refer to FIG. 4. The code generation module 220 may perform step 403 to generate target code of each rule in the ACL.

In step 403, a matching item of a rule may be obtained, and a matching logic instruction corresponding to the rule is generated based on the matching item. Then, target code of the rule is generated based on the matching logic instruction corresponding to the rule and the matching item of the rule. For example, the matching logic instruction corresponding to the rule and the matching item of the rule are combined to obtain the target code of the rule.

In some embodiments, the matching item of the rule may be a default value. The default value covers all possible values of the to-be-matched value of the target data packet. Therefore, regardless of a value of the to-be-matched value, when it is determined, based on the matching item, whether the to-be-matched value matches the rule, a result that the to-be-matched value matches the rule is obtained. In this case, when access control is performed on the target data packet, whether the to-be-matched value of the target data packet matches the rule does not need to be determined, and a matching result that the to-be-matched value matches the rule can be directly obtained. Therefore, default code may be generated in step 403, and the default code indicates to skip execution of the matching logic instruction corresponding to the rule. When access control is performed on the target data packet, the default code is executed, to skip the matching logic instruction corresponding to the rule. In other words, the matching logic instruction corresponding to the rule is not executed.

In some embodiments, the matching item of the rule is a preset value. In step 403, determining code F1 may be generated, where the determining code F1 indicates to determine whether the to-be-matched value of the target data packet is consistent with the matching item. The determining code F1 may be used as the matching logic instruction corresponding to the rule. When access control is performed on the target data packet, the determining code F1 is executed, to determine whether the to-be-matched value of the target data packet is consistent with the matching item. If the to-be-matched value of the target data packet is consistent with the matching item, it indicates that the to-be-matched value of the target data packet matches the rule.

In some embodiments, the matching item of the rule is a plurality of consecutive values, and the plurality of consecutive values form an interval. In step 403, determining code F2 may be generated. The determining code F2 indicates to determine whether the to-be-matched value of the target data packet is within the interval. The determining code F2 may be used as the matching logic instruction corresponding to the rule. When access control is performed on the target data packet, the determining code F2 is executed, to determine whether the to-be-matched value of the target data packet is within the interval. If the to-be-matched value of the target data packet is within the interval, it indicates that the to-be-matched value of the target data packet matches the rule.

In an example of this embodiment, a left endpoint of the interval is a smallest value of the to-be-matched value of the target data packet, that is, the left endpoint is a smallest value in all possible values of the to-be-matched value. In other words, regardless of a value of the to-be-matched value, the to-be-matched value is greater than or equal to the left endpoint of the interval. Therefore, when access control is performed on the target data packet, whether the to-be-matched value is greater than or equal to the left endpoint of the interval does not need to be determined, and only whether the to-be-matched value is less than or equal to a right endpoint of the interval needs to be determined, so as to determine whether the to-be-matched value is within the interval. In this example, the determining code F2 may indicate to determine only whether the to-be-matched value is less than or equal to the right endpoint of the interval. In this way, during access control, only whether the to-be-matched value is less than or equal to the right endpoint of the interval is determined, thereby further improving efficiency of access control.

In another example of this embodiment, a right endpoint of the interval is a largest value of the to-be-matched value of the target data packet, that is, the right endpoint is a largest value in all possible values of the to-be-matched value. In other words, regardless of a value of the to-be-matched value, the to-be-matched value is less than or equal to the right endpoint of the interval. Therefore, when access control is performed on the target data packet, whether the to-be-matched value is less than or equal to the right endpoint of the interval does not need to be determined, and only whether the to-be-matched value is greater than or equal to a left endpoint of the interval needs to be determined, so as to determine whether the to-be-matched value is within the interval. In this example, the determining code F2 may indicate to determine only whether the to-be-matched value is greater than or equal to the left endpoint of the interval. In this way, during access control, only whether the to-be-matched value is greater than or equal to the left endpoint of the interval is determined, thereby further improving efficiency of access control.

In some embodiments, the ACL includes the at least one rule, and the at least one rule may be traversed to generate the target code of each rule. The ACL may include a plurality of pieces of routing information, each piece of routing information includes at least one rule, and the at least one rule of each piece of routing information may be traversed to generate target code for the at least one rule of each piece of routing information. There is a matching sequence of at least one rule of a same piece of routing information, and the at least one rule may be traversed according to the matching sequence, to generate the target code.

Next, a solution for generating the target code is described with reference to a specific rule.

Generally, routing information may include at least one of a protocol number, a source IP address, a source port, a destination IP address, and a destination port. A protocol number, a source IP address, a source port, a destination IP address, and a destination port in same routing information respectively represent one rule. Generally, a matching sequence is as follows: the protocol number, the source IP address, the source port, the destination IP address, and the destination port.

Target code may be first generated for the rule of the protocol number. Specifically, there may be the following cases. A value of a protocol number in the ACL is a matching item, and a value of a protocol number of a data packet is a to-be-matched value.

Case D1: A matching item of a protocol number of a piece of routing information is a default value, that is, the value of the protocol number of the routing information covers all possible values of a protocol number of the target data packet. In other words, regardless of the value of the protocol number of the target data packet, the protocol number of the target data packet is consistent with the protocol number of the routing information. In this case, the protocol number of the target data packet matches the protocol number in the routing information by default. In this case, in step 403, default code may be generated for the protocol number, and the default code indicates to skip execution of a matching logic instruction corresponding to the protocol number. During access control, the default code is executed, and whether the protocol number of the target data packet matches the protocol number in the routing information is not determined.

Case D2: When a quantity of matching items of a protocol number of a piece of routing information is one, that is, when the matching item of the protocol number of the routing information is a preset value, determining code F1 may be generated for the protocol number. The determining code F1 indicates to determine whether a value of a protocol number of the target data packet is consistent with the matching item of the protocol number. The determining code F1 may be used as a matching logic instruction corresponding to the protocol number. When access control is performed on the target data packet, the determining code F1 is executed, to determine whether the value of the protocol number of the target data packet is consistent with the matching item of the protocol number. If the value of the protocol number of the target data packet is consistent with the matching item of the protocol number, it indicates that the protocol number of the target data packet matches the protocol number of the routing information.

Case D3: When a matching item of a protocol number of a piece of routing information is a plurality of consecutive values, an interval may be generated based on the plurality of values. The interval is a closed interval, a right endpoint of the interval is a largest value in the plurality of values, and a left endpoint of the interval is a smallest value in the plurality of values. In step 403, determining code F2 may be generated for the protocol number. The determining code F2 indicates to determine whether a value of a protocol number of the target data packet is within the interval. When access control is performed on the target data packet, the determining code F2 is executed, to determine whether the value of the protocol number of the target data packet is within the interval. If the value of the protocol number of the target data packet is within the interval, it indicates that the protocol number of the target data packet matches the protocol number of the routing information.

In an example of this embodiment, the left endpoint of the interval is a smallest value of the protocol number of the target data packet, that is, the left endpoint is a smallest value in all possible values of the protocol number of the target data packet. In this example, the determining code F2 may indicate to determine only whether the value of the protocol number of the target data packet is less than or equal to the right endpoint of the interval. When access control is performed on the target data packet, only whether the value of the protocol number of the target data packet is less than or equal to the right endpoint of the interval is determined. If the value of the protocol number of the target data packet is less than or equal to the right endpoint of the interval, it indicates that the protocol number of the target data packet matches the protocol number of the routing information.

In another example of this embodiment, the right endpoint of the interval is a largest value of the protocol number of the target data packet, that is, the right endpoint is a largest value in all possible values of the protocol number of the target data packet. In this example, the determining code F2 may indicate to determine only whether the value of the protocol number of the target data packet is greater than or equal to the left endpoint of the interval. When access control is performed on the target data packet, only whether the value of the protocol number of the target data packet is greater than or equal to the left endpoint of the interval is determined. If the value of the protocol number of the target data packet is greater than or equal to the left endpoint of the interval, it indicates that the protocol number of the target data packet matches the protocol number of the routing information.

Next, target code may be generated for a rule of the source IP address. Specifically, there may also be the following cases. A value of a source IP address in the ACL is a matching item, and a value of a source IP address in the data packet is a to-be-matched value.

Case E1: A matching item of a source IP address of a piece of routing information is a default value, that is, the value of the source IP address of the routing information covers all possible values of a source IP address of the target data packet. In other words, regardless of the value of the source IP address of the target data packet, the source IP address of the target data packet is consistent with the source IP address of the routing information. For example, the source IP address "0.0.0.0/0" shown in Table 2 is equivalent to "0-0xFFFFFFFF", which covers all possible values of the source IP address of the target data packet. In this case, the source IP address of the target data packet matches the source IP address in the routing information by default. In this case, in step 403, default code may be generated for the source IP address, and the default code indicates to skip execution of a matching logic instruction corresponding to the source IP address. During access control, the default code is executed, and whether the source IP address of the target data packet matches the source IP address in the routing information is not determined.

Case E2: When a quantity of matching items of a source IP address of a piece of routing information is one, that is, when the matching item of the source IP address of the routing information is a preset value, determining code F1 may be generated for the source IP address. The determining code F1 indicates to determine whether a value of a source IP address of the target data packet is consistent with the matching item of the source IP address. The determining code F1 may be used as a matching logic instruction corresponding to the source IP address. When access control is performed on the target data packet, the determining code F1 is executed, to determine whether the value of the source IP address of the target data packet is consistent with the matching item of the source IP address. If the value of the source IP address of the target data packet is consistent with the matching item of the source IP address, it indicates that the source IP address of the target data packet matches the source IP address of the routing information.

Case E3: When a matching item of a source IP address of a piece of routing information is a plurality of consecutive values, an interval may be generated based on the plurality of values. The interval is a closed interval, a right endpoint of the interval is a largest value in the plurality of values, and a left endpoint of the interval is a smallest value in the plurality of values. In step 403, determining code F2 may be generated for the source IP address. When access control is performed on the target data packet, the determining code F2 is executed, to determine whether a value of a source IP address of the target data packet is within the interval. If the value of the source IP address of the target data packet is within the interval, it indicates that the source IP address of the target data packet matches the source IP address of the routing information.

In an example of this embodiment, the left endpoint of the interval is a smallest value (0) of the source IP address of the target data packet, that is, the left endpoint is a smallest value in all possible values of the source IP address. In this example, the determining code F2 may indicate to determine only whether the value of the source IP address of the target data packet is less than or equal to the right endpoint of the interval. When access control is performed on the target data packet, only whether the value of the source IP address of the target data packet is less than or equal to the right endpoint of the interval is determined. If the value of the source IP address of the target data packet is less than or equal to the right endpoint of the interval, it indicates that the source IP address of the target data packet matches the source IP address of the routing information.

In another example of this embodiment, the right endpoint of the interval is a largest value (0xFFFFFFFF) of the source IP address of the target data packet, that is, the right endpoint is a largest value in all possible values of the source IP address. In this example, the determining code F2 may indicate to determine only whether the value of the source IP address of the target data packet is greater than or equal to the left endpoint of the interval. When access control is performed on the target data packet, only whether the value of the source IP address of the target data packet is greater than or equal to the left endpoint of the interval is determined. If the value of the source IP address of the target data packet is greater than or equal to the left endpoint of the interval, it indicates that the source IP address of the target data packet matches the source IP address of the routing information.

Next, target code may be generated for rules of the source port, the destination IP address, and the destination port. Matching items of the source port, the destination IP address, and the destination port also have the foregoing Case E1, Case E2, and Case E3. The target code may be generated for the source port, the destination IP address, and the destination port respectively according to the matching items of the source port, the destination IP address, and the destination port with reference to the manners described above. Details are not described herein again. In a related communication protocol, a largest value of a port is "65535" (that is, 2 to the power of 16 minus 1), and a smallest value of the port is "0".

In the foregoing manner, the target code may be generated for the protocol number, the source IP address, the source port, the destination IP address, and the destination port in the routing information. The code forms target code of the routing information. In target code of same routing information, an execution sequence of target code of a protocol number, a source IP address, a source port, a destination IP address, and a destination port is consistent with a matching sequence of the protocol number, the source IP address, the source port, the destination IP address, and the destination port.

Target code of all routing information in the ACL forms the target code of the ACL. Target code of different routing information is executed in serial. In other words, after target code of one piece of routing information is completely executed, target code of another piece of routing information is then executed.

In an example, the following target code may be generated for the routing information whose sequence number is 1 shown in Table 2.
if (Protocol number=6 && 0xc0a80000 <= Destination IP && Destination IP <= 0xc0a800ff && Destination port <= 80)
return 1;// If the condition required by the rule is met, return that the routing information whose sequence number is 1 is hit.

All rules in the routing information whose sequence number is 2 are default matching rules. Therefore, target code of the routing information whose sequence number is 2 is "return 2; //A 2^{nd} code means that all cases can be matched by default, and when the code is executed, directly return the routing information whose sequence number is 2."

After JIT compilation, target code corresponding to the two pieces of routing information shown in Table 2 includes the following code:
if (Protocol number=6 && 0xc0a80000 <= Destination IP && Destination IP <= 0xc0a800ff && Destination port <= 80)
return 1;
return 2;

In some embodiments, the target code of the ACL may be generated based on the dictionary tree corresponding to the ACL. In step 403, the dictionary tree may be traversed starting from the root node of the dictionary tree, to generate target code for each node.

As described above, a node corresponds to a rule, and records a matching item of the rule corresponding to the node. Target code of the rule corresponding to the node may be generated based on a quantity of next-hop nodes of the node and the matching item recorded by the node. Specifically, there may be the following cases.

Case A1: Each position in the node has a value, and the quantity of next-hop nodes of the node in the dictionary tree is one. If each position in the node has a value, it indicates that the node records all possible matching items of the rule, that is, the matching items recorded by the node cover all possible values of the to-be-matched value of the target data packet. In other words, the rule corresponding to the node is no limitation, the matching item of the rule is a default value, and the to-be-matched value of the data packet matches, by default, the rule corresponding to the node. For Case A1, in step 404, default code is generated for the rule corresponding to the node, and the default code indicates to skip execution of a matching logic instruction corresponding to the rule. When access control is performed on the target data packet, the default code is executed, whether the to-be-matched value of the target data packet matches the rule is not determined, and a matching result that the to-be-matched value of the target data packet matches the rule is directly obtained.

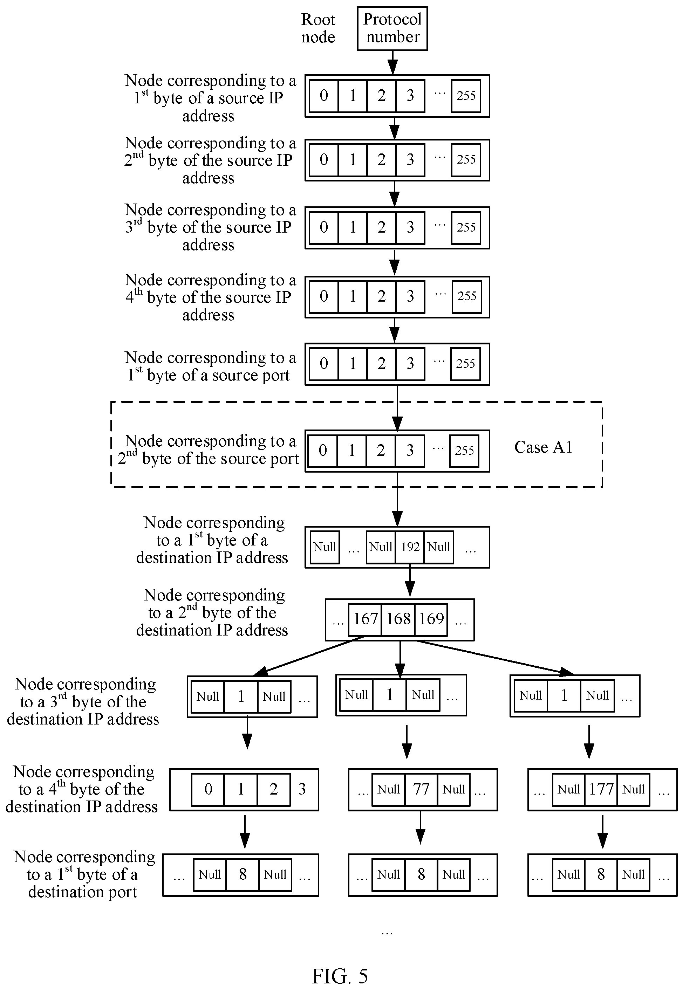

For example, as shown in FIG. 5, each position in a node corresponding to the rule of the 2^{nd} byte of the source port has a value, and a quantity of next-hop nodes of the node in the dictionary tree is one. Default code is generated for the rule of the 2^{nd} byte of the source port. When access control is performed on the target data packet, the default code is executed, whether the to-be-matched value of the target data packet matches the rule of the 2^{nd} byte of the source port is not determined, and a matching result that the to-be-matched value of the target data packet matches the rule is directly obtained.

Case A2: The node records one or more matching items, the matching item recorded by the node does not cover all possible values of the to-be-matched value of the data packet, and a quantity of next-hop nodes of the node in the dictionary tree is one. In this case, a determining code used to determine whether the to-be-matched value of the data packet is consistent with the matching item recorded by the node may be generated. Then, the target code of the rule corresponding to the node is obtained based on the determining code and the matching item recorded by the node. When access control is performed on the target data packet, the determining code is executed, to determine whether the to-be-matched value of the target data packet matches the rule corresponding to the node.

Case A2 may include the following two cases.

Case A21: The quantity of next-hop nodes of the node in the dictionary tree is one, and a quantity of matching items recorded by the node is one. In a network ACL, when a protocol number is fixed, or several bytes in an IP address are fixed, Case A21 occurs in the dictionary tree. In Case A21, the node records a value in only one position, and other positions are null. The value recorded by the node points to one next-hop node. In step 403, the determining code F1 may be generated for the rule corresponding to the node. The determining code F1 indicates to determine whether the to-be-matched value of the target data packet is consistent with the matching item recorded by the node. When access control is performed on the target data packet, the determining code F1 is executed, to determine whether the to-be-matched value of the target data packet is consistent with the matching item recorded by the node. If the to-be-matched value of the target data packet is consistent with the matching item recorded by the node, it indicates that the to-be-matched value of the target data packet matches the rule corresponding to the node.

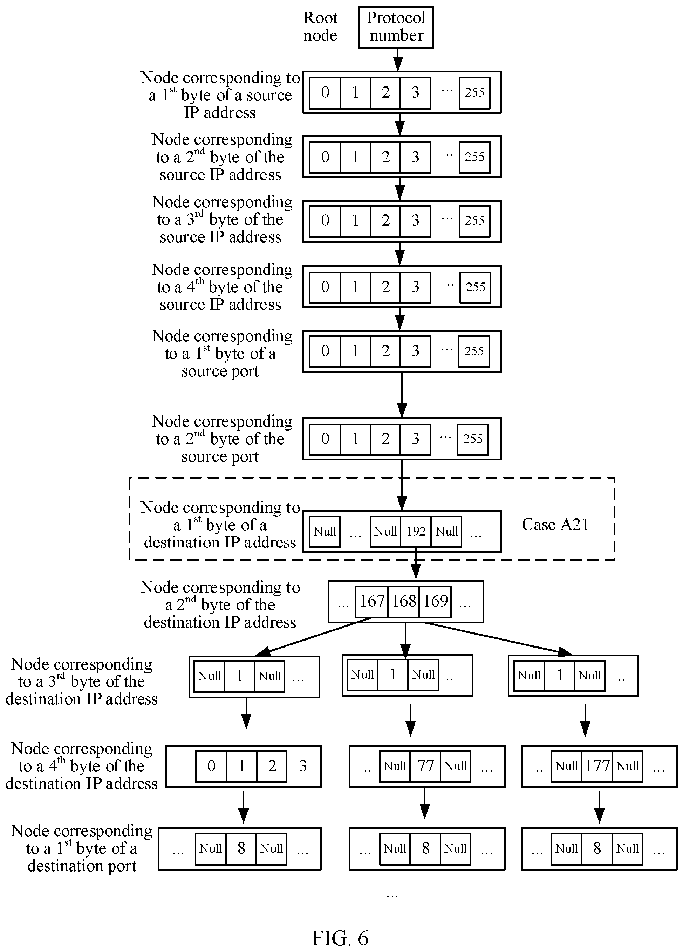

For example, as shown in FIG. 6, a value of the 1^{st} byte of the destination IP address is "192" that is, only the value "192" is recorded in a node corresponding to the 1^{st} byte of the destination IP address. In step 403, the determining code F1 may be generated, where the determining code F1 indicates to determine whether the value of the 1^{st} byte of the destination IP address of the target data packet is the consistent with "192".

Case A22: The quantity of next-hop nodes of the node in the dictionary tree is one, and the node records a plurality of matching items, where the plurality of matching items are a plurality of consecutive preset values. In Case A22, the plurality of preset values may be obtained, and an interval is generated based on the plurality of preset values. The interval is a closed interval, a right endpoint of the interval is a largest value in the plurality of values, and a left endpoint of the interval is a smallest value in the plurality of values. In step 403, the determining code F2 may be generated for the node. The determining code F2 indicates to determine whether the to-be-matched value of the target data packet is within the interval. When access control is performed on the target data packet, the determining code F2 is executed, to determine whether the to-be-matched value of the target data packet is within the interval. If the to-be-matched value of the target data packet is within the interval, it indicates that the to-be-matched value of the target data packet matches the rule corresponding to the node.

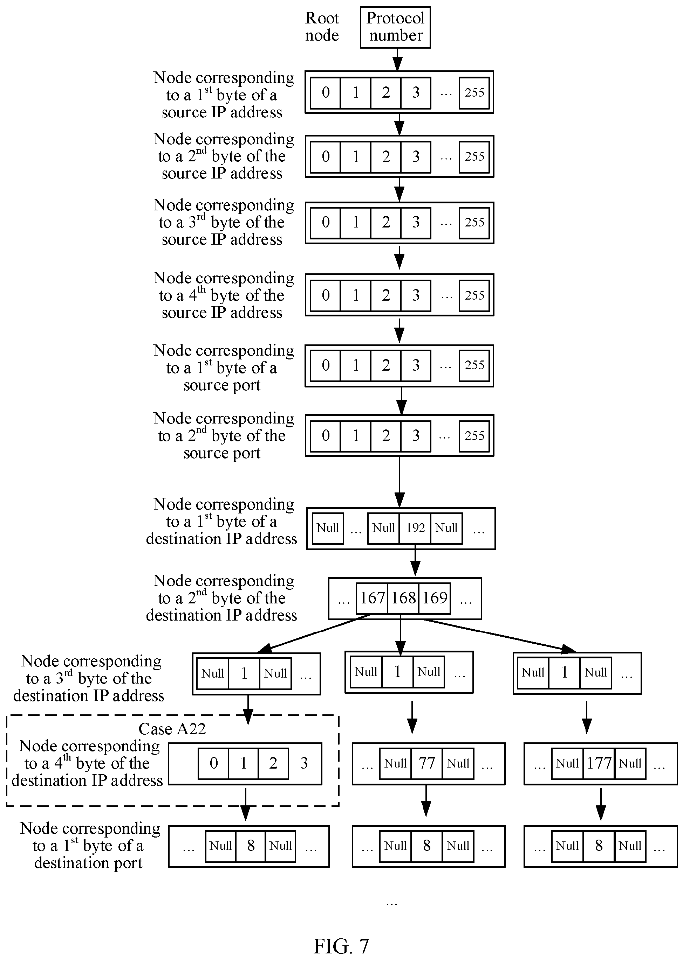

For example, as shown in FIG. 7, a value of the 4^{th} byte of the destination IP address may be any one of 0, 1, 2, and 3. In other words, 0, 1, 2, and 3 are recorded in a node corresponding to the 4^{th} byte of the destination IP address. An interval [0, 3] may be obtained based on 0, 1, 2, and 3. The determining code F2 may be generated for the node. The determining code F2 indicates to determine whether the to-be-matched value of the target data packet is within the interval [0, 3].

In addition, when the left endpoint of the interval is the smallest value of the to-be-matched value of the target data packet, that is, when the left endpoint is the smallest value in all possible values of the to-be-matched value, the determining code F2 may indicate to determine only whether the to-be-matched value of the target data packet is less than or equal to the right endpoint of the interval. When access control is performed on the target data packet, only whether the to-be-matched value of the target data packet is less than or equal to the right endpoint of the interval is determined. If the to-be-matched value of the target data packet is less than or equal to the right endpoint of the interval, it indicates that the to-be-matched value of the target data packet matches the rule corresponding to the node.

When the right endpoint of the interval is the largest value of the to-be-matched value of the target data packet, that is, when the right endpoint is the largest value in all possible values of the to-be-matched value, in this example, the determining code F2 may indicate to determine only whether the to-be-matched value of the target data packet is greater than or equal to the left endpoint of the interval. When access control is performed on the target data packet, only whether the to-be-matched value of the target data packet is greater than or equal to the left endpoint of the interval is determined. If the to-be-matched value of the target data packet is greater than or equal to the left endpoint of the interval, it indicates that the to-be-matched value of the target data packet matches the rule corresponding to the node.

In some embodiments, if the node does not belong to Case A1 or Case A2, code used to implement the conventional table lookup manner is generated for the node. In other words, the code is used to determine, according to the conventional table lookup manner, whether the to-be-matched value of the target data packet matches the rule corresponding to the node. In other words, when it is determined whether the to-be-matched value of the target data packet matches the rule corresponding to the node, the code is used to read a matching item from a memory address corresponding to the node, and determine, based on the read matching item, whether the data packet matches the rule corresponding to the node.

In some embodiments, an instruction used to return (return) indication information is generated for each node in the dictionary tree. To be specific, the target code of each node further includes the instruction used to return the indication information, and the indication information indicates that the to-be-matched value of the data packet does not match the rule corresponding to the node. In other words, when it is determined that the to-be-matched value of the data packet does not match the rule corresponding to the node, the instruction that is used to return the indication information and that corresponds to the node is executed.

In some embodiments, tail code may be further generated. The tail code is the last code to be executed. The tail code is used to restore the non-volatile register from the stack, write the matching result back to a return value register, and execute a matching result return instruction.

The target code of each node, the code used to return the indication information, the tail code, and the like that are generated above form the target code of the ACL. In the target code of the ACL, an execution sequence of target code of rules corresponding to nodes is consistent with a jump sequence of the nodes in the dictionary tree. The jump sequence of the nodes in the dictionary tree is consistent with a matching sequence of the rules corresponding to the nodes. Therefore, the execution sequence of the target code of the rules corresponding to the nodes is consistent with the matching sequence of the rules corresponding to the nodes.

The foregoing describes a process of generating the target code of the ACL. The following describes a method for performing access control on the target data packet by using the target code.

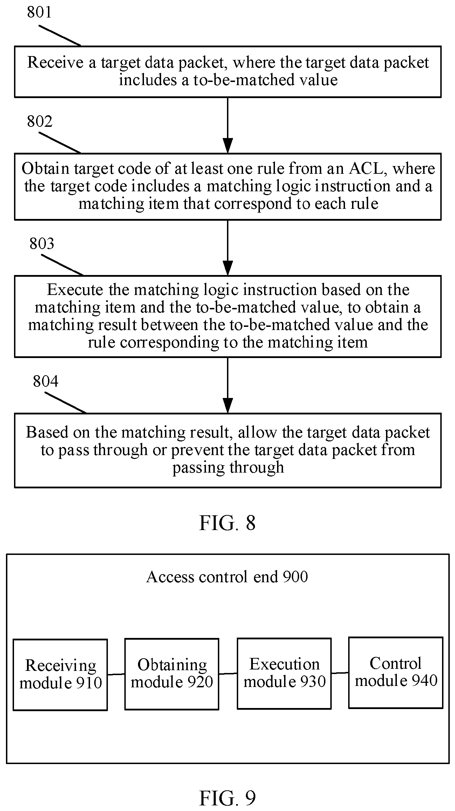

The access control end 200 may perform access control on the target data packet by using the target code of the ACL. As shown in FIG. 8, the method includes the following steps.

Step 801: Receive the target data packet, where the target data packet includes a to-be-matched value. The target data packet may be a data packet sent to a resource end 300.

The to-be-matched value may be at least one of a protocol number, a source port, a source IP address, a destination port, and a destination IP address. In other words, the to-be-matched value may be at least one of a value of the protocol number of the target data packet, a value of the source port of the target data packet, a value of the source IP address of the target data packet, a value of the destination port of the target data packet, and a value of the destination IP address of the target data packet.

After receiving the target data packet, the access control end 200 may parse the target data packet, to obtain the to-be-matched value.

Step 802: Obtain target code of at least one rule from the ACL, where the target code includes a matching logic instruction and a matching item that correspond to each rule, and the matching item is used to determine whether the to-be-matched value matches a rule corresponding to the matching item. The determining may be specifically executed by the matching logic instruction. In other words, the access control end 200 determines, by executing the matching logic instruction, whether the to-be-matched value matches the rule corresponding to the matching item.

The ACL may include one or more pieces of routing information, and the at least one rule may be a rule of one piece of routing information.

The matching logic instruction and the matching item that correspond to each rule are included in the target code. In this way, when loading the target code from a memory, a processor of the access control end 200 can obtain the matching item through loading. In this way, the matching item does not need to be separately obtained from the memory in a matching process, thereby reducing a memory access operation.

In some embodiments, before step 801, the target code of the at least one rule may be generated. A matching item of the at least one rule may be obtained. Then, the target code of the at least one rule is generated based on a matching logic instruction and the matching item that correspond to the at least one rule. For details, refer to the foregoing description of the embodiment shown in FIG. 4. Details are not described herein again.

Step 802 is performed by an access control module 230 in the access control end 200. The target code of the at least one rule is generated by a code generation module 220. When the access control module 230 and the code generation module 220 run on a same compute device (for example, the access control end 200 may be a compute device cluster, and the access control module 230 and the code generation module 220 run on a same compute device in the compute device cluster), the access control module 230 may obtain, in a manner like shared memory, the target code generated by the code generation module 220.

When the access control module 230 and the code generation module 220 run on different compute devices (for example, the access control end 200 may be a compute device cluster, and the access control module 230 and the code generation module 220 run on different compute devices in the compute device cluster), a compute device running the code generation module 220 may send, through a network or the like, the target code to a compute device running the access control module 230, so that the access control module 230 obtains the target code.

When the access control module 230 obtains the target code, the access control module 230 may apply to an operating system of the access control end 200 for an executable memory. For example, when the operating system has a portable operating system interface (portable operating system interface, POSIX), the access control module 230 may apply to the operating system for the executable memory by using a memory mapping function mmap. For another example, when the operating system is Windows^{®}, the access control module 230 may apply to the operating system for the executable memory by using a VirtualAlloc function.

When the executable memory is obtained through application, the access control module 230 may copy the target code to the executable memory, and remove write permission of the executable memory, to prevent the target code from being tampered with. The access control module 230 may return an initial address of the executable memory to the processor. The initial address of the executable memory is used as an address of the target code, for the processor to invoke the target code.

Step 803: Execute the matching logic instruction based on the matching item and the to-be-matched value, to obtain a matching result between the to-be-matched value and the rule corresponding to the matching item.

The matching logic instruction is used to determine whether the matching item is consistent with the to-be-matched value. If the matching item is consistent with the to-be-matched value, it indicates that the to-be-matched value matches the rule corresponding to the matching item, and a matching result indicating matching is obtained. If the matching item is inconsistent with the to-be-matched value, it indicates that the to-be-matched value does not match the rule corresponding to the matching item, and a matching result indicating not matching is obtained.

In some embodiments, as described above, the matching item of the rule may be a default value, the target code of the rule includes default code, and the default code indicates to skip execution of the matching logic instruction corresponding to the rule. In step 803, when the matching item is the default value, the default code is executed, to skip execution of the matching logic instruction corresponding to the rule, thereby reducing an execution operation of the logic instruction and improving efficiency of access control. In this embodiment, the matching result indicating matching is obtained by default.

In some embodiments, as described above, the matching item of the rule may be a preset value, and the target code of the rule includes a determining code F1. The determining code F1 instructs to determine whether the to-be-matched value is consistent with the matching item. Executing the matching logic instruction corresponding to the rule includes: executing the determining code F1 of the rule, to obtain a determining result about whether the to-be-matched value is consistent with the matching item. If the determining result indicates that the to-be-matched value is consistent with the matching item, the matching result indicating matching is obtained. If the determining result indicates that the to-be-matched value is inconsistent with the matching item, the matching result indicating not matching is obtained.

In some embodiments, as described above, the matching item of the rule may be a preset interval, and the target code of the rule includes a determining code F2. The determining code F2 instructs to determine whether the to-be-matched value is within the preset interval. Executing the matching logic instruction corresponding to the rule includes: executing the determining code F2 of the rule, to obtain a determining result about whether the to-be-matched value is within the preset interval. If the determining result indicates that the to-be-matched value is within the preset interval, the matching result indicating matching is obtained. If the determining result indicates that the to-be-matched value is not within the preset interval, the matching result indicating not matching is obtained. In this way, the matching result can be obtained without comparing the to-be-matched value with each matching item of the rule one by one, thereby improving efficiency of access control.

In an example of this embodiment, if a left endpoint of the preset interval is a smallest value of the to-be-matched value, the determining code F2 only instructs to determine whether the to-be-matched value is less than or equal to a right endpoint of the preset interval. In other words, in step 803, it may be determined only whether the to-be-matched value is less than or equal to the right endpoint of the preset interval. When the to-be-matched value is less than or equal to the right endpoint of the preset interval, the matching result indicating matching may be obtained. When the to-be-matched value is greater than the right endpoint of the preset interval, the matching result indicating not matching is obtained. In this way, when the left endpoint of the preset interval is the smallest value of the to-be-matched value, whether the to-be-matched value is greater than or equal to the left endpoint of the preset interval does not need to be determined, thereby reducing a determining operation and further improving efficiency of access control.

In another example of this embodiment, if the right endpoint of the preset interval is a largest value of the to-be-matched value, the determining code F2 only instructs to determine whether the to-be-matched value is greater than or equal to a left endpoint of the preset interval. In other words, in step 803, it may be determined only whether the to-be-matched value is greater than or equal to the left endpoint of the preset interval. When the to-be-matched value is greater than or equal to the left endpoint of the preset interval, the matching result indicating matching may be obtained. When the to-be-matched value is less than the left endpoint of the preset interval, the matching result indicating not matching is obtained. In this way, when the right endpoint of the preset interval is the largest value of the to-be-matched value, whether the to-be-matched value is less than or equal to the right endpoint of the preset interval does not need to be determined, thereby reducing a determining operation and further improving efficiency of access control.

When the matching result is obtained, the access control end 200 may perform the following operation in step 804: based on the matching result, allowing the target data packet to pass through or preventing the target data packet from passing through. The target data packet is the data packet sent to the resource end 300. In step 804, based on the matching result, the access control end 200 may allow or prevent sending of the target data packet to the resource end 300.

If the matching result indicates that the to-be-matched value matches the rule, it indicates that the target data packet hits the routing information in the ACL. When the ACL is a whitelist, the access control end 200 allows the target data packet to pass through, to send the target data packet to the resource end 300. The access control end 200 may put the target data packet into an interface between the access control end 200 and the resource end 300, to send the target data packet to the resource end 300 through the interface. When the ACL is a blacklist, the access control end 200 prevents the target data packet from passing through, to avoid sending the target data packet to the resource end 300. The access control end 200 may discard the target data packet.

In some embodiments, the ACL includes a plurality of pieces of routing information. In step 803, the access control end 200 may determine, one by one, whether the target data packet matches the pieces of routing information. When a matching result that the target data packet matches one piece of routing information is obtained, the access control end 200 may perform step 804. When the matching result that the target data packet matches one piece of routing information is not obtained, the access control end 200 may continue to determine whether the target data packet matches next routing information.

When the target data packet does not match the plurality of pieces of routing information, the access control end 200 may perform step 804. When the ACL is a whitelist, the access control end 200 prevents the target data packet from passing through. When the ACL is a blacklist, the access control end 200 allows the target data packet to pass through.

In conclusion, according to the access control method provided in this application, the matching item is included in the code used to perform access control. When loading the code from the memory, the processor can obtain the matching item through loading. In this way, when it is determined whether the target data packet matches the rule, the matching item does not need to be separately obtained from the memory, thereby reducing a quantity of times of memory access, reducing memory access operations, and improving efficiency of access control.

An embodiment of this application further provides an access control end 900. As shown in FIG. 9, the access control end 900 includes:
a receiving module 910, configured to receive a target data packet, where the target data packet includes a to-be-matched value;
an obtaining module 920, configured to obtain target code of at least one rule from an access control list ACL, where the target code includes a matching logic instruction and a matching item that correspond to each rule, and the matching item is used to determine whether the to-be-matched value matches a rule corresponding to the matching item;
an execution module 930, configured to execute the matching logic instruction based on the matching item and the to-be-matched value, to obtain a matching result between the to-be-matched value and the rule corresponding to the matching item; and
a control module 940, configured to: based on the matching result, allow the target data packet to pass through or prevent the target data packet from passing through.

In some embodiments, the to-be-matched value includes at least one of a protocol number, a source port, a source internet protocol IP address, a destination port, and a destination IP address.

In some embodiments, before the target data packet is received, the obtaining module 920 is configured to: obtain the matching item; and generate the target code based on the matching logic instruction and the matching item that correspond to the at least one rule.

In an example of this embodiment, the matching item is a default value, and the obtaining module 920 is configured to: generate default code based on the matching logic instruction and the matching item that are of the at least one rule, where the default code indicates to skip execution of the matching logic instruction.

In an example of this embodiment, the matching item is a preset value, and the obtaining module 920 is configured to: generate first determining code based on the matching logic instruction and the matching item that are of the at least one rule, where the first determining code indicates to determine whether the to-be-matched value is consistent with the matching item.

In an example of this embodiment, the matching item is a preset interval, the preset interval includes a left endpoint and a right endpoint, and the obtaining module 920 is configured to: determine that the left endpoint is a smallest value of the to-be-matched value, and generate second determining code based on the matching logic instruction and the matching item that are of the at least one rule, where the second determining code indicates to determine whether the to-be-matched value is less than or equal to the right endpoint; or determine that the right endpoint is a largest value of the to-be-matched value, and generate third determining code based on the matching logic instruction and the matching item that are of the at least one rule, where the third determining code indicates to determine whether the to-be-matched value is greater than or equal to the left endpoint.

In some embodiments, the target code of the at least one rule in the ACL is generated by a JIT compiler based on a dictionary tree structure.

The receiving module 910, the obtaining module 920, the execution module 930, and the control module 940 may all be implemented by software, or may be implemented by hardware. For example, the following uses the receiving module 910 as an example to describe an implementation of the receiving module 910. Similarly, for implementations of the obtaining module 920, the execution module 930, and the control module 940, refer to the implementation of the receiving module 910.

The module is used as an example of a software functional unit, and the receiving module 910 may include code run on a computing instance. The computing instance may include at least one of a physical host (a compute device), a virtual machine, or a container. Further, there may be one or more computing instances. For example, the receiving module 910 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is configured in one region. A communication gateway needs to be configured in each VPC for communication between two VPCs in a same region and cross-region communication between VPCs in different regions. The VPCs are interconnected through the communication gateway.

The module is used as an example of a hardware functional unit, and the receiving module 910 may include at least one compute device, for example, a server. Alternatively, the receiving module 910 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

A plurality of compute devices included in the receiving module 910 may be distributed in a same region, or may be distributed in different regions. The plurality of compute devices included in the receiving module 910 may be distributed in a same AZ, or may be distributed in different AZs. Similarly, the plurality of compute devices included in the receiving module 910 may be distributed in a same VPC, or may be distributed in a plurality of VPCs. The plurality of compute devices may be any combination of compute devices such as a server, an ASIC, a PLD, a CPLD, an FPGA, and a GAL.

It should be noted that, in another embodiment, the receiving module 910 may be configured to perform any step in the method shown in FIG. 8, the obtaining module 920 may be configured to perform any step in the method shown in FIG. 8, the execution module 930 may be configured to perform any step in the method shown in FIG. 8, and the control module 940 may be configured to perform any step in the method shown in FIG. 8. Steps responsible for implementation by the receiving module 910, the obtaining module 920, the execution module 930, and the control module 940 may be specified as required, and all functions of the access control end 900 are implemented by separately implementing different steps in the method shown in FIG. 8 by the receiving module 910, the obtaining module 920, the execution module 930, and the control module 940.

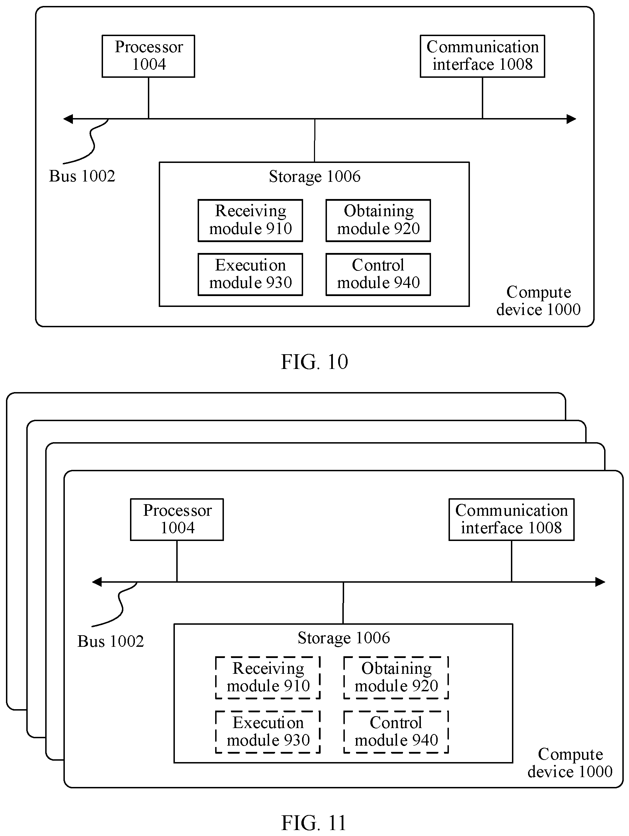

This application further provides a compute device 1000. As shown in FIG. 10, the compute device 1000 includes a bus 1002, a processor 1004, a storage 1006, and a communication interface 1008. The processor 1004, the storage 1006, and the communication interface 1008 communicate with each other through the bus 1002. The compute device 1000 may be a server or a terminal device. It should be understood that a quantity of processors and a quantity of storages in the compute device 1000 are not limited in this application.

The bus 1002 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 10, but this does not mean that there is only one bus or only one type of bus. The bus 1002 may include a path for transferring information between components (for example, the storage 1006, the processor 1004, and the communication interface 1008) of the compute device 1000.

The processor 1004 may include any one or more of processors such as a central processing unit (central processing unit, CPU), a graphics processing unit (graphics processing unit, GPU), a microprocessor (microprocessor, MP), or a digital signal processor (digital signal processor, DSP).

The storage 1006 may include a volatile memory (volatile memory), for example, a random access memory (random access memory, RAM). The storage 1006 may further include a non-volatile memory (non-volatile memory), for example, a read-only memory (read-only memory, ROM), a flash storage, a hard disk drive (hard disk drive, HDD), or a solid-state drive (solid-state drive, SSD).

The storage 1006 stores executable program code, and the processor 1004 executes the executable program code to separately implement functions of the receiving module 910, the obtaining module 920, and the execution module 930, and the control module 940, to implement the method shown in FIG. 8. In other words, the storage 1006 stores instructions for performing the method shown in FIG. 8.

The communication interface 1008 uses a transceiver module, for example, but not limited to, a network interface card or a transceiver, to implement communication between the compute device 1000 and another device or a communication network.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

As shown in FIG. 11, the compute device cluster includes at least one compute device 1000. A storage 1006 in one or more compute devices 1000 in the compute device cluster may store same instructions for performing the method shown in FIG. 8.

In some possible implementations, the storage 1006 in the one or more compute devices 1000 in the compute device cluster may alternatively separately store some instructions for performing the method shown in FIG. 8. In other words, a combination of the one or more compute devices 1000 may jointly execute the instructions for performing the method shown in FIG. 8.

It should be noted that storages 1006 in different compute devices 1000 in the compute device cluster may store different instructions, to separately perform a part of functions of the access control end 900. In other words, the instructions stored in the storages 1006 in different compute devices 1000 may implement functions of one or more of modules such as the receiving module 910, the obtaining module 920, the execution module 930, and the control module 940.

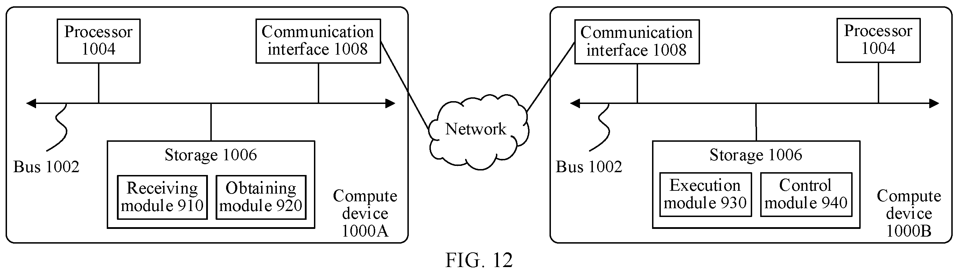

In some possible implementations, the one or more compute devices in the compute device cluster may be connected via a network. The network may be a wide area network, a local area network, or the like. FIG. 12 shows a possible implementation. As shown in FIG. 12, two compute devices 1000A and 1000B are connected via a network. Specifically, each compute device is connected to the network through a communication interface in the compute device. In this type of possible implementation, a storage 1006 in the compute device 1000A stores instructions for performing functions of the receiving module 910 and the obtaining module 920. In addition, a storage 1006 in the compute device 1000B stores instructions for performing functions of the execution module 930 and the control module 940.

It should be understood that a function of the compute device 1000A shown in FIG. 12 may alternatively be completed by a plurality of compute devices 1000. Similarly, a function of the compute device 1000B may alternatively be completed by the plurality of compute devices 1000.

An embodiment of this application further provides another compute device cluster. For a connection relationship between compute devices in the compute device cluster, refer to connection manners of the compute device cluster in FIG. 11 and FIG. 12 similarly. A difference lies in that a storage 1006 in one or more compute devices 1000 in the compute device cluster may store same instructions for performing the method shown in FIG. 8.

In some possible implementations, the storage 1006 in the one or more compute devices 1000 in the compute device cluster may alternatively separately store some instructions for performing the method shown in FIG. 8. In other words, a combination of the one or more compute devices 1000 may jointly execute the instructions for performing the method shown in FIG. 8.

An embodiment of this application further provides a computer program product including instructions. The computer program product may be software or a program product that includes instructions and that can run on a compute device or can be stored in any usable medium. When the computer program product runs on at least one compute device, the at least one compute device is enabled to perform the method shown in FIG. 8.

An embodiment of this application further provides a computer-readable storage medium. The computer-readable storage medium may be any usable medium that can be stored by a compute device, or a host migration device like a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a compute device to perform the method shown in FIG. 8.

Finally, it should be noted that the foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof. However, these modifications or replacements do not make the essence of the corresponding technical solutions depart from the protection scope of the technical solutions in embodiments of this application.

## Claims

1. An access control method, wherein the method comprises:
receiving a target data packet, wherein the target data packet comprises a to-be-matched value;
obtaining target code of at least one rule from an access control list ACL, wherein the target code comprises a matching logic instruction and a matching item that correspond to each rule, and the matching item is used to determine whether the to-be-matched value matches a rule corresponding to the matching item;
executing the matching logic instruction based on the matching item and the to-be-matched value, to obtain a matching result between the to-be-matched value and the rule corresponding to the matching item; and
based on the matching result, allowing the target data packet to pass through or preventing the target data packet from passing through.

2. The method according to claim 1, wherein the to-be-matched value comprises at least one of a protocol number, a source port, a source internet protocol IP address, a destination port, and a destination IP address.

3. The method according to claim 1 or 2, wherein before the receiving the target data packet, the method further comprises:
obtaining the matching item; and
generating the target code based on a matching logic instruction and the matching item that correspond to the at least one rule.

4. The method according to claim 3, wherein the matching item is a default value, and the generating the target code based on the matching logic instruction and the matching item that correspond to the at least one rule comprises:
generating default code based on the matching logic instruction and the matching item that are of the at least one rule, wherein the default code indicates to skip execution of the matching logic instruction.

5. The method according to claim 3, wherein the matching item is a preset value, and the generating the target code based on the matching logic instruction and the matching item that correspond to the at least one rule comprises:
generating first determining code based on the matching logic instruction and the matching item that are of the at least one rule, wherein the first determining code indicates to determine whether the to-be-matched value is consistent with the matching item.

6. The method according to claim 3, wherein the matching item is a preset interval, the preset interval comprises a left endpoint and a right endpoint, and the generating the target code based on the matching logic instruction and the matching item that correspond to the at least one rule comprises:
determining that the left endpoint is a smallest value of the to-be-matched value, and generating second determining code based on the matching logic instruction and the matching item that are of the at least one rule, wherein the second determining code indicates to determine whether the to-be-matched value is less than or equal to the right endpoint; or
determining that the right endpoint is a largest value of the to-be-matched value, and generating third determining code based on the matching logic instruction and the matching item that are of the at least one rule, wherein the third determining code indicates to determine whether the to-be-matched value is greater than or equal to the left endpoint.

7. The method according to any one of claims 1 to 6, wherein the target code of the at least one rule in the ACL is generated by a JIT compiler based on a dictionary tree structure.

8. An access control end, wherein the access control end comprises:
a receiving module, configured to receive a target data packet, wherein the target data packet comprises a to-be-matched value;
an obtaining module, configured to obtain target code of at least one rule from an access control list ACL, wherein the target code comprises a matching logic instruction and a matching item that correspond to each rule, and the matching item is used to determine whether the to-be-matched value matches a rule corresponding to the matching item;
an execution module, configured to execute the matching logic instruction based on the matching item and the to-be-matched value, to obtain a matching result between the to-be-matched value and the rule corresponding to the matching item; and
a control module, configured to: based on the matching result, allow the target data packet to pass through or prevent the target data packet from passing through.

9. The access control end according to claim 8, wherein the to-be-matched value comprises at least one of a protocol number, a source port, a source internet protocol IP address, a destination port, and a destination IP address.

10. The access control end according to claim 8 or 9, wherein before the target data packet is received, the obtaining module is configured to:
obtain the matching item; and
generate the target code based on a matching logic instruction and the matching item that correspond to the at least one rule.

11. The access control end according to claim 10, wherein the matching item is a default value, and the obtaining module is configured to:
generate default code based on the matching logic instruction and the matching item that are of the at least one rule, wherein the default code indicates to skip execution of the matching logic instruction.

12. The access control end according to claim 10, wherein the matching item is a preset value, and the obtaining module is configured to:
generate first determining code based on the matching logic instruction and the matching item that are of the at least one rule, wherein the first determining code indicates to determine whether the to-be-matched value is consistent with the matching item.

13. The access control end according to claim 10, wherein the matching item is a preset interval, the preset interval comprises a left endpoint and a right endpoint, and the obtaining module is configured to:
determine that the left endpoint is a smallest value of the to-be-matched value, and generate second determining code based on the matching logic instruction and the matching item that are of the at least one rule, wherein the second determining code indicates to determine whether the to-be-matched value is less than or equal to the right endpoint; or
determine that the right endpoint is a largest value of the to-be-matched value, and generate third determining code based on the matching logic instruction and the matching item that are of the at least one rule, wherein the third determining code indicates to determine whether the to-be-matched value is greater than or equal to the left endpoint.

14. The access control end according to any one of claims 8 to 13, wherein the target code of the at least one rule in the ACL is generated by a JIT compiler based on a dictionary tree structure.

15. A compute device cluster, comprising at least one compute device, wherein each compute device comprises a processor and a storage; and
a processor of the at least one compute device is configured to execute instructions stored in a storage of the at least one compute device, to cause the compute device cluster to perform the method according to any one of claims 1 to 7.

16. A computer program product comprising instructions, wherein when the instructions are run by a compute device cluster, the compute device cluster is caused to perform the method according to any one of claims 1 to 7.

17. A computer-readable storage medium, comprising computer program instructions, wherein when the computer program instructions are executed by a compute device cluster, the compute device cluster performs the method according to any one of claims 1 to 7.
